Europäisches Patentamt

European Patent Office

Office européen des brevets

(11) Publication number: **0 149 156**
**A2**

## (12) EUROPEAN PATENT APPLICATION

(21) Application number: **84115448.7**

(22) Date of filing: **14.12.84**

(51) Int. Cl.⁴: **C 08 G 71/00**
**C 08 G 18/70, C 08 J 3/24**
**C 08 K 5/00, C 08 K 5/16**
**C 08 G 59/56, C 09 D 5/44**

(30) Priority: **16.12.83 US 562320**
**02.04.84 US 596183**

(43) Date of publication of application:
**24.07.85 Bulletin 85/30**

(84) Designated Contracting States:
**AT BE DE FR GB IT NL SE**

(71) Applicant: **PPG INDUSTRIES, INC.**
**One PPG Place**
**Pittsburgh Pennsylvania 15272(US)**

(72) Inventor: **Moriarity, Thomas Charles**
**2910 Hemlock Drive**
**Allison Park, Pa. 15101(US)**

(72) Inventor: **Scriven, Roger Louis**
**634 Westland Drive**
**Gibsonia, Pa. 15044(US)**

(74) Representative: **Hann, Michael, Dr. et al,**
**Patentanwälte Dr. Michael Hann Dr. H.-G. Sternagel**
**Marburger Strasse 38**
**D-6300 Giessen(DE)**

(54) A novel process of curing compositions with the reaction product of polyprimary amines and organic carbonates.

(57) There is disclosed herein a process for curing composi-
tions which comprise the use therein of a reaction product of
a polyfunctional amine and an organic carbonate, as a curing
agent.

EP 0 149 156 A2

(E-1855)

# A NOVEL PROCESS OF CURING COMPOSITIONS WITH THE REACTION PRODUCT OF POLYPRIMARY AMINES AND ORGANIC CARBONATES

Field of the invention: The present invention relates to curable compositions, especially heat-curable compositions and the methods of making and using same, particularly in cationic electrodeposition. More specifically, the present invention relates to compositions comprising curing agents which are akin to blocked isocyanates. These curing agents, however, are the reaction product of polyprimary amines and organic carbonates.

Brief description of the prior art: Curable compositions containing blocked isocyanates are known in the art. In the main, blocked isocyanates are prepared by reacting an isocyanate with a blocked agent. This method of preparation has found a wide use despite a number of shortcomings. Principally, the isocyanates are toxic and, therefore, present health hazards. Also, the isocyanates are highly reactive and, therefore, present
handling problems. Some of the isocyanates are rather
expensive and / or difficult to find. As would be seen,
the above shortcomings present limitations on the use
of blocked isocyanates as curing agents.

In the present invention, curing agents having the
structure of blocked isocyanates are used; they are,
however, prepared without using isocyanate starting
materials.

In accordance with the foregoing, the present invention
encompasses a process for curing a composition which
contains an active hydrogen-containing material comprising heating the composition to a temperature
sufficient to provide an effective cure; wherein the
composition contains a curing agent which is a reaction
product of:

(i)     a polyfunctional amine, and

(ii)     an organic carbonate;

the curing agent is present as an internal or external
component of the active hydrogen-containing material.

In the practice of this invention, the compositions
are typically coating compositions, particularly
electrodepositable compositions. Consonantly, the present invention encompasses a method of providing a
decorative or protective coating for substrates, particularly by electrodeposition. The method comprises applying to the substrate an active hydrogen-containing coating composition comprising the reaction product of a polyfunctional amine and an organic carbonate.

The polyfunctional amines useful herein are preferably polyprimary amines and more preferably aliphatic polyprimary amines. Non-limiting examples of the polyprimary amines are alkylamines or arylamines such as 1,3-diaminopropane, 1,5-diaminopropane, isophorone diamine, menthane diamine, and xylylene diamine. In the particularly preferred embodiments of the invention, the polyprimary amines contain more than two primary amino groups. Non-limiting examples of the polyprimary amine containing more than two amino groups are a polyoxypropylene polyamine such as JEFFAMINE T403 which is commercially available from Jefferson Company, and an adduct of an epoxy-containing material such as a polyepoxide, and polyalkylene polyamine wherein the reactive amino groups, e.g., primary amino groups, are blocked with, say, a ketone or an aldehyde. A convenient method of preparing, say an adduct of a polyalkylene polyamine and a polyepoxide entails blocking the terminal amino groups of the polyamine such as diethylene triamine or triethylene tetramine with a ketone such as methyl isobutyl ketone, thus forming a diketimine. The diketimine is reacted with the polyepoxide over a temperature range of about 65 - 150°C. During the reaction, it is believed that the ketimine remains blocked leaving reactive secondary amino groups. The secondary amino groups react with the epoxy groups, thus providing a resin containing a plurality of blocked amino groups. These amino groups can be hydrolyzed and unblocked in an aqueous medium, for example, and then reacted with the organic carbonates described herein. The preparation of these polyamines is disclosed in U.S. Patent 4,017,438, column 7, line 43, to column 8, line 44, which is incorporated herein by reference.

Other examples of polyfunctional amines are those containing at least one primary or secondary amino group and another functional group containing an active hydrogen such as a hydroxyl group. As would be realized, the reaction of the polyfunctional amines with the organic carbonate is through the amino group. In this regard, primary amino groups are preferred but secondary amino groups can be employed.

The organic carbonate useful herein is preferably cyclic. Non-limiting examples of the organic carbonate are alkylene carbonates such as ethylene carbonate, propylene carbonate; dialkyl carbonates such as dimethyl carbonate, diethyl carbonate, 2-ethylhexyl carbonate; oxyalkylene carbonates such as hexyl-2-ethoxyethanol carbonate; and arylalkyl, or diaryl carbonates such as diphenyl carbonates. Preferred herein are ethylene carbonate and propylene carbonate.

In carrying out the reaction, the polyfunctional amine is reacted with the organic carbonate in proportions that can vary depending, for example, upon the particular starting reactants employed and the conditions of the reaction. In the preferred embodiments, about one primary amine group is present for each mole of the organic carbonate. The temperature of the reaction can vary depending, for example, on the particular reactants employed, the desired rate of reaction and the like.

Generally, the reaction temperature can be varied from room temperature to about 200°C. The reaction can be conducted in the absence of a solvent or in the presence of solvents that are relatively inert. Examples of the useful solvents are toluene, xylene, acetone, ethylene glycol monoethyl ether and the like. At the end of the reaction, the inert solvent or an unreacted ingredient can be removed by any suitable means, for example, by distillation, decantation or the like. Alternately, the reaction mixture, with the solvent and any unreacted ingredients, can be used without any separation provided that the polyprimary amino-organic carbonate reaction product is present in an appreciable amount. Catalysts may be employed in this reaction, particu-larly when non-cyclic carbonates are used. Strong base catalysts such as potassium t-butoxide will be useful, in this regard.

In the practice of the invention, the curing agent is useful in combination with active hydrogen-containing materials to form curable compositions such as coating, molding or laminating compositions. In the preferred low temperature cure embodiments of the invention, the curing agent is employed with cure catalysts which are more fully defined herein. The active hydrogen group can be hydroxyl, primary or secondary amino or thio group, with the hydroxyl group being preferred. Non-limiting examples of the active hydrogen-containing materials are hydroxyl group-containing polymers, e.g., polymeric polyols, such as alkyd polymers, polyester polymers, hydroxyl group-containing acrylic polymers, hydroxyl group-containing polyurethane polymers, hydroxyl group-containing polyurea polymers, hydroxyl group-containing polyether polymers, hydroxyl group-containing epoxy polymers and hydroxyl group-containing polymers which are polyepoxide-amine adducts. The epoxy polymers can be epoxy-free or epoxy-containing.

The molecular weights of the polymeric polyols can vary over a wide range depending upon their type and on whether the curable composition is organic solvent based or water based and also on the desired performance characteristics of the coating. Polyester, epoxy and alkyd polymers can have molecular weights as low as about 500 and as high as about 50000, preferably the molecular weights are usually in the range of about 1000 to 5000; the molecular weights being on a number average basis relative to polystyrene, as determined by gel permeation chromatography. Acrylic polymers prepared by solution polymerization can have molecular weights of about 100000 or higher, and usually in the range of about 5000 to 50000 on a number average basis relative to polystyrene, as can be determined by gel permeation chromatography. For acrylic latices, the molecular weight can range from 100000 to several millions.

The hydroxyl content of the polymeric polyol should be sufficient such that when the polyol is in combination with the curing agent, the composition will cure to a solvent-resistant coating. Generally, the hydroxyl number of the polymeric polyol will be at least about 50 and preferably will be in the range of about 100 to 300, based on resin solids.

A preferred class of polymeric polyols are hydroxyl group-containing epoxy polymers. A particularly preferred class of polymeric polyols are the polyepoxide-amine adducts. The epoxy polymers which can be used in the practice of the invention are polyepoxides, that is, polymers having a 1,2-epoxy equivalency greater than 1, preferably about 2 or more.

Preferred are polyepoxides which are difunctional with regard to epoxy. The preferred polyepoxides are polyglycidyl ethers of cyclic polyols. Particularly preferred are polyglycidyl ethers of polyphenols such as bisphenol A. Examples of polyepoxides are given in U.S. Patent 4,260,716, column 3, line 20, to column 4, line 30, the portions of which are hereby incorporated by reference.

Besides the epoxy polymers disclosed above, other epoxy-containing polymers which can be used are acrylic polymers which contain epoxy groups. These polymers are formed by polymerizing an unsaturated epoxy group-containing monomer such as glycidyl acrylate or methacrylate with one or more other polymerizable ethylenically unsaturated monomers. Examples of these polymers are described in U.S. Patent 4,001,156 column 3, line 59, to column 5, line 60, the portions of which are hereby incorporated by reference.

Examples of amines which can be used in preparing the polyepoxideamine adduct are ammonia, primary, secondary and tertiary amines and mixtures thereof. The reaction product of the polyepoxide and the amine can be at least partially neutralized with an acid to form a polymeric product containing amine salt and / or quaternary ammonium salt groups. Reaction conditions of polyepoxides with amines, examples of various amines and at least partial neutralization with acid are disclosed in U.S. Patent 4,260,720, column 5, line 20, to column 7, line 4, the portions of which are hereby incorporated by reference.

Also, various polyepoxideramine adducts are described in European Patent Application 0012463.

With regard to the amount of organic amine and polyepoxide which are reacted with one another, the relative amounts depend upon the extent of cationic base such as cationic salt group formation desired and this in turn will depend upon the molecular weight of the polymer. The extent of cationic salt group formation and the molecular weight of the reaction product should be selected such that when the resultant cationic polymer is mixed with aqueous medium, a stable dispersion will form. A stable dispersion is one which does not settle or is one which is easily dispersible if some sedimentation occurs. In some embodiments, the dispersion should additionally be of sufficient cationic character that the dispersed polymer particles will migrate towards the cathode when an electrical potential is impressed between an anode and a cathode immersed in aqueous dispersion.

Also, the molecular weight, structure and extent of cationic salt group formation should be controlled such that the dispersed polymer will have the required flow to form a film on the substrate; in the case of electrodeposition, to form a film on the cathode. The film should be insensitive to moisture to the extent that it will not redissolve in the electrodeposition bath or be rinsed away from the coated surface after removal from the bath.

In general, most of the cationic polymers useful in the practice of the invention will have average molecular weights within the range of about 500 - 100000 and contain from about 0.01 to 10, preferably about 0.1 to 5.0, preferably from about 0.3 to 3.0 milliequivalents of basic group, e.g., cationic group, per gram of resin solids. Obviously one must use the skill in the art to couple the molecular weight with the cationic group content to arrive at a satisfactory polymer. The polyglycidyl ethers will have molecular weights of about 500 to 10000, preferably 1000 to 5000. Acrylic polymers, on the other hand, will have molecular weights as high as 100000, preferably 5000 to 50000.

Besides the cationic polymers, anionic polymers which are designed to form aqueous-based coating compositions may be used in coating applications such as electrodeposition. It should also be appreciated that organic solvent-based coating compositions employing the above polymers without ionic salt groups can also be used. Formulating coating compositions with such polymers is well known in the art and need not be described in any further detail.

The curing agent can be an external or internal component of the active hydrogen-containing material. In the latter case, the reaction product is integral with the active hydrogen-containing material rather than being present as a separate component. Illustrative examples of integral curing agents are shown in U.S. Patent 3,947,338. Whether present as an external or internal component of the active hydrogen-containing material, the reaction product is present in an amount sufficient to impart excellent cure to the curable composition. Typically, the reaction product is present in an equivalent ratio of 0.1 : 1 and preferably 0.3 to 1 : 1.

The curing agent is usually employed in combination with a cure catalyst. Typically, the cure catalyst is a metal salt and / or complex of a metal such as lead, zinc, iron, tin and manganese. Suitable salts of these metals are, for example, octoates and naphtha-nates. A suitable complex is, for example, acetyl acetonate. The cure catalyst is used in amounts sufficient to effect cure at the relatively low temperatures described herein. For example, the metal salt and / or complex is employed as a cure catalyst in amounts of about 0.1 to 2.0, preferably 0.2 to 1 percent metal by weight (solids) based on the weight of the curable composition. The cure catalyst can be mixed simultaneously with other starting materials for the preparation of the coating composition, or introduced into the coating composition in any order that is convenient.

In the practice of the invention, the curable compositions can be used as coating, laminating or molding compositions. Preferably, they can be used as water-based or solvent-based coating compositions. The components of the coating composition can be mixed simultaneously or in any order that is convenient. If the components are a liquid and of sufficiently low viscosity, they can be mixed together neat to form the coating composition. Alternately, if the components are higher viscosity liquids or solids, the components can be mixed with a diluent to reduce the viscosity of the composition so that it may be suitable for coating applications.

By liquid diluent is meant a solvent or a non-solvent which is volatile and which is removed after the coating is applied and is needed to reduce viscosity sufficiently to enable forces available in simple coating techniques, that is, brushing and spraying, to spread the coating to controllable, desired and uniform thickness. Also, diluents assist in substrate wetting, resinous component compatability and coalescence or film formation. Generally, when used, the diluent will be present in the composition in amounts of about 20 to 90, preferably 50 to 80 percent by weight based on total weight of the coating composition, although more diluent may be employed depending upon the particular coating application.

Examples of suitable liquid diluents for organic solvent-based coatings will depend somewhat on the particular system employed. In general, however, aromatic hydrocarbons such as toluene and xylene, ketones such as methyl ethyl ketone and methyl isobutyl ketone, alcohols such as isopropyl alcohol, normal butyl alcohol, monoalkyl ethers of glycols such as 2-alkoxyethanol, 2-alkoxypropanol and compatible mixtures of these solvents can be used.

Besides organic solvents, water can be used as a diluent either alone or in combination with water-miscible organic solvents. When water is used, the coating composition is usually modified such as by incorporating water-solubilizing groups such as the cationic groups mentioned above to provide for the necessary solubility in water. Besides the cationic groups mentioned above, other water-solubilizing groups such as non-ionic groups, for example, ethylene oxide groups, and anionic groups such as carboxylate salt groups may be introduced into the polymer to disperse or solubilize the coating composition in water.

The coating compositions of the invention may also optionally contain a pigment. Pigments may be of any conventional type, comprising, for example, iron oxides, lead oxides, strontium chromate, carbon black, coal dust, titanium dioxide, talc, barium sulfate, as well as color pigments such as cadmium yellow, cadmium red, chromium yellow and metallic pigments such as aluminum flake.

The pigment content of the coating composition is usually expressed as the pigment-to-resin weight ratio. In the practice of the present invention, pigment-to-resin weight ratios can be 2 : 1 or higher, and for most pigmented coatings, are usually within the range of about 0.05 to 1 : 1.

In addition to the above ingredients, various fillers, plasticizers, anti-oxidants, ultraviolet light absorbers, flow control agents, surfactants and other formulating additives can be employed if desired. These materials are optional and generally constitute up to 30 percent by weight of the coating composition based on total solids.

The coating compositions of the invention can be applied by conventional methods, e.g., no-electrophoretic methods including brushing, dipping, flow coating and spraying. Usually, they can be applied virtually over any substrate including wood, metal, glass, cloth, leather, plastic, foam and the like, as well as over various primers. For electroconductive substrates such as metals, the coatings can be apllied by electrodeposition. In general, the coating thickness will vary somewhat depending upon the application desired. In general, coatings from about 2.5 to 250 μm can be applied and coatings from about 2.5 to 127 μm are usual.

When aqueous dispersions of the coating composition are employed for use in electrodeposition, the aqueous dispersion is placed in contact with an electrically conductive anode and an electrically conductive cathode. The surface to be coated can be made the cathode or the anode. In the case of cationic electrodeposition, which is preferred herein, the surface to be coated is the cathode. Following contact with the aqueous dispersion, an adherent film of the coating composition is deposited on the electrode being coated when a sufficient voltage is impressed between the electrodes. Conditions under which electrodeposition is carried out are known in the art. The applied voltage may be varied and can be, for example, as low as one volt or as high as several thousand volts, but is typically between 50 and 500 volts. Current density is usually between 1.0 ampere and 15 amperes per square foot and tends to decrease during electrodeposition indicating the formation of an insulating film.

After the coating has been applied, it is cured by heating at elevated temperatures for a period of time sufficient to form solvent-resistant coatings. By solvent-resistant coatings is meant that the coating will be resistant to acetone, for example, by rubbing across the coating with an acetone-saturated cloth. Coatings which are not cured or poorly cured will not withstand the rubbing action with acetone and will be removed with less than 10 acetone double rubs. Cured coatings, on the other hand, will withstand a minimum of 20 acetone double rubs, and preferably 100 acetone double rubs.

It has been found that substrates coated with compositions employing the curing agents can cure at relatively lower temperatures. In certain embodiments of the invention, it has been found that the curing agents impart cure at temperatures as low as $135^\circ$C. For example, when the reaction product of the polyprimary amine and the carbonate is a beta-hydroxyurethane, it would impart cure at relatively low temperatures.

These and other aspects of the invention are illustrated more specifically by the following non-limiting examples.

Example 1
_____

This example illustrates the reaction of m-xylylene diamine and ethylene carbonate.

| Ingredients | Parts by Weight (grams) |
| --- | --- |
| m-Xylylene diamine | 136 |
| Ethylene carbonate | 176 |
| Ethylene glycol monoethyl ether | 134 |

The m-xylylene diamine was charged to a properly equipped reaction vessel. The ethylene carbonate was then added thereto over a period of 15 minutes with a resulting exotherm. At 110°C, the addition was stopped and the reaction vessel cooled to a temperature of 80°C. Thereat, the addition was resumed until all of the ethylene carbonate had been added. The reaction mixture was then held for about 5 hours at 80°C. Infra-red analysis of the reaction mixture showed the presence of only a trace amount of the ethylene carbonate. The ethylene glycol monoethyl ether was then added to the reaction mixture.

Example 2
------------

This example illustrates the process of curing coatings using the reaction product of m-xylylene diamine and propylene carbonate. The reaction product was prepared as follows:

| Ingredients | Parts by Weight (grams) |
|---|---|
| m-Xylylene diamine | 366.0 |
| Propylene carbonate | 555.0 |
| Ethylene glycol monobutyl ether | 229.0 |

A properly equipped reaction vessel was charged with the m-xylylene diamine and the propylene carbonate was introduced therein. The addition was exothermic; after half of the propylene carbonate was added, the reaction temperature rose to 85°C. Air-cooling was effected so as to keep the exotherm to a maximum of 100°C while the rest of the propylene carbonate was being added.

Upon completion of the addition, the reaction mixture was held at 85°C for about 4 hours. Infra-red analysis of the reaction mixture showed the presence of only a trace amount of the propylene carbonate. The reaction mixture was found to contain 0.335 milliequivalents of amine per gram. The ethylene glycol monobutyl ether was then added to the reaction mixture. The resultant mixture having a solids content of 73.9 was discharged and stored.

A film-forming resin comprising an acrylic polymer was prepared using the following:

| Ingredients | Parts by Weight (grams) |
|---|---|
| Charge I | |
| DOWANOL PM[1] | 118.0 |
| Deionized Water | 13.3 |
| Monomer Charge | |
| Butyl acrylate | 340.0 |
| Styrene | 248.0 |
| Hydroxypropyl methacrylate | 80.0 |
| Methyl methacrylate | 28.0 |
| Glycidyl methacrylate | 104.0 |
| Tertiary-dodecyl mercaptan | 26.0 |

continuation

| Ingredients | Parts by weight (grams) |
|---|---|
| **Monomer Charge** | |
| VAZO 67[2] | 72.8 |
| DOWANOL PM | 57.6 |
| **Charge II** | |
| VAZO 67 | 6.8 |
| DOWANOL PM | 14.0 |

[1] Propylene glycol monomethyl ether, available from Dow Chemical Company

[2] 2,2'-azobis-(2-methylbutyronitrile), available from Du Pont Chemicals

The above were used to prepare an acrylic polymer by free radical solution polymerization technique. The resultant polymer had a resin solids content of 78.2 percent.

An aqueous dispersion of the above acrylic polymer containing the curing agent of example 2 was prepared. The following were used:

| Ingredients | Parts by Weight (grams) |
|---|---|
| Methylethanolamine | 46.3 |
| ARMEEN 2C[1] | 33.2 |
| The curing agent described above | 363.6 |
| Lactic acid | 37.2 |
| Deionized water | 3200.0 |
| The acrylic polymer as described above | 1200 |

[1] Dicocoamine, available from Armak Chemicals

The resultant dispersion had a resin solids content of 25.5 percent. Twelve hundred (1200) grams of the dispersion (24.8 percent solids) was diluted with deionized water and mixed with 10 grams of a catalyst paste comprising dibutyltin oxide (32 percent, ground with a compatible resin), and the resultant composition was electrocoated as follows.

Zinc phosphated and iron phosphated steel substrates were electrocoated in the above composition at $21^{\circ}C$ using 125 volts for 90 seconds. The obtained films were cured by baking at $177^{\circ}C$ for 30 minutes. The films had a thickness of about 23 $\mu m$. The films cured well in that it took from about 50 to 100 acetone rubs to remove them.

## Example 3

This example illustrates the preparation of a film-former having an integral curing agent. It comprised the reaction product of an epoxypolyamine adduct and an organic carbonate. The epoxy-polyamine adduct was prepared, as follows:

| Ingredients | Parts by Weight (grams) |
| --- | --- |
| Epoxy resin solution [1] | 1283.5 |
| Ketimine of triethylene tetramine solution [2] | 579.0 |

[1] Solution of EPON 1001, available from Shell Chemical Company, having epoxy equivalent of 507 at 75 percent solids in methyl isobutyl ketone.

[2] The ketimine solution is prepared by reacting triethylene tetramine (Union Carbide) with excess methyl isobutyl ketone with azeotropic reflux to remove water as the ketimine is formed. The solution contained 0.35 grams of triethylene tetramine per gram.

The ketimine solution was charged to a properly equipped reaction vessel and heated to 80°C under a nitrogen blanket. The epoxy resin solution was introduced to the reaction vessel and the mixture was heated slowly to 110 - 125°C and held for about 4 hours. The resultant product having latent primary amino groups was discharged and stored.

Reaction of propylene carbonate with the epoxy-polyamine adduct: To 931.3 grams of the above epoxy-amine adduct solution was added 30 grams of deionized water, 32.9 grams of propylene carbonate and 32.9 grams of DOWANOL PPH (phenoxy propanol, available from Dow Chemical Company). The mixture was then heated to 100°C and held for one hour. Nine hundred sixty (960) grams of this resin was solubilized into 240.9 grams of deionized water, 48.2 grams of acetic acid and 7.8 grams of cationic surfactant comprising 120 parts by weight of alkylimidazoline (commercially available from Geigy Industrial Chemicals as GEIGY AMINE C), 120 parts by weight of acetylenic alcohol (commercially available from Air Products and Chemicals as SURFYNOL 104) and 120 parts by weight of 2-butoxyethanol and 19 parts by weight of glacial acetic acid. This is followed by further dilution with 293.5 grams deionized water. The aqueous resinous dispersion had a pH of 6.21. One thousand nine hundred thirty-six (1936) grams of this dispersion was diluted with 360 grams of deionized water and stripped under vacuum to remove solvent. The resultant aqueous solution had a solids content of 27.5 percent.

To 65 grams of the above dispersion was added 0.23 grams of lead lactate (200 parts per million of lead based on resin solids). 76 $\mu$m (three mil) draw-down of this dispersion on bare steel substrates were prepared and baked at 182°C for 30 minutes. The films cured well in that it took 50 acetone double rubs to remove them.

Example 4

This example illustrates the reaction of an organic carbonate with a polyprimary amine containing more than two primary amino groups.

| Ingredients | Parts by Weight (grams) |
| --- | --- |
| Ketimine of triethylene tetramine solution [1] | 360.0 |
| EPON 828 [2] | 188 |
| Deionized water | 100 |
| Ethylene carbonate | 177.0 |

[1] 72.7 percent solution of the ketimine was prepared in essentially the same manner as described in example 3

[2] Epoxy resin of epoxy equivalent of 188, available from Shell Chemical Company

The ketimine solution was charged to a properly equipped reaction vessel and kept under a nitrogen blanket. The liquid epoxy resin was added and the mixture heated to 120°C. After one hour at 115 - 120°C, the mixture was cooled to 60°C and the deionized water was added and the mixture allowed to cool to 30°C over about a 2-1/2 hour period. The ethylene carbonate was then added over about a one-half hour period during which time the temperature increased from 30°C to 40°C. After about one-half hour, the temperature began to drop and the reaction mixture was heated to 65°C and held for 20 minutes. On cooling and standing, the mixture separated into two layers. The mixture was then vacuum stripped with ≤ 66 cm    vacuum at 40 - 60°C. Ethylene glycol monoethyl ether was added during the stripping process, as necessary, to control viscosity and foaming. A total of 150 grams of the ethylene glycol monoethyl ether was added. On standing, a solvent layer again separated from the product and the resinous product was separated from this layer. The final product contained 73.8 percent N.V. and 1.55 percent $H_2O$. The infra-red spectrum showed a strong urethane band.

**0149156**

CLAIMS:

1. A process for curing a composition which contains an active hydrogen-containing material comprising heating the composition to a temperature sufficient to provide an effective cure; wherein the composition contains a curing agent which is a reaction product of:

   (i)     a polyfunctional amine, and

   (ii)    an organic carbonate;

   the curing agent is present as an internal or external component of the active hydrogen-containing material.

2. A process of claim 1, wherein the polyfunctional amine is a polyprimary amine.

3. A process of claim 2, wherein the polyprimary amine is aliphatic.

4. A process of claim 2, wherein the polyprimary amine is 1,3-diaminopropane, 1,5-diaminopropane, isophorone diamine, methane diamine, or xylylene diamine.

5. A process of claim 2, wherein the polyprimary amine contains more than two primary amino groups.

6. A process of claim 5, wherein the polyprimary amine is a polyoxyalkylene polyamine, or a hydrolyzed adduct of a polyepoxide and a polyalkylene polyamine wherein the primary amino groups are blocked with a ketone.

7. A process of claim 6, wherein the polyprimary amine is a hydrolyzed adduct of a diepoxide and diketimine of diethylene triamine or triethylene tetramine.

8. A process of claim 1, wherein the organic carbonate is cyclic.

9. A process of claim 1, wherein the organic carbonate is ethylene carbonate, propylene carbonate, dimethyl carbonate, diethyl carbonate, diphenyl carbonate, 2-ethylhexyl carbonate or hexyl-2-ethoxyethanol carbonate.

10. A process of claim 1, wherein the organic carbonate is ethylene carbonate or propylene carbonate.

11. A process of claim 1, wherein the active hydrogen-containing material is an epoxy polymer, an acrylic polymer, a polyurethane or a polyester.

12. A process of claim 1, wherein the composition is a coating.

13. A method of electrocoating an electrically conductive surface serving as an electrode in an electrical circuit comprising a cathode, an anode and an aqueous electrodepositable composition, by passing an electric current between said anode and cathode, wherein the aqueous electrodepositable composition comprises an aqueous dispersion of an active hydrogen-conatining material which contains an ionic group, and a curing agent which is a reaction product of

(i)     a polyfunctional amine,   and

(ii)    an organic carbonate.

14. A method of claim 13, wherein the electrically conductive surface is a cathode.

15. A resinous composition which is derived from an epoxy group-containing material and which contains moieties obtained by reacting primary amine groups with organic carbonates.

16. A resinous composition of claim 15 which is derived from a reaction product of:

    (a)   a hydrolyzed adduct of an epoxy material and a polyprimary amine having at least two primary amino groups which are blocked by a ketimine group and having a secondary amine group, and

    (b)   an organic carbonate.

17. A resinous composition of claim 16, wherein the epoxy material is a polyglycidyl ether or ester.

18. A resinous composition of claim 17, wherein the epoxy material is a polyglycidyl ether of polyphenol.

19. A resinous composition of claim 18, wherein the epoxy material is a diglycidyl ether of bisphenol A.

20. A resinous composition of claim 16, wherein the polyprimary amine is a diketimine of diethylene triamine or triethylene tetramine.

21. A resinous composition of claim 20, wherein the polyprimary amine is of diethylene triamine.

22. A resinous composition of claim 16, wherein the
    organic carbonate is cyclic.

23. A resinous composition of claim 16, wherein the
    organic carbonate is ethylene carbonate, propylene
    carbonate, dimethyl carbonate, diethyl carbonate,
    diphenyl carbonate, 2-ethylhexyl carbonate or
    hexyl-2-ethoxyethanol carbonate.

24. A resinous composition of claim 16, wherein the
    organic carbonate is ethylene carbonate or propylene carbonate.

25. A water-based coating composition comprising a
    resinous composition of claim 16, and a water-
    solubilizing group.

26. An electrodepositable composition comprising an
    aqueous dispersion of a resinous composition of
    claim 16 which contains an ionic group.

27. An electrodepositable composition of claim 26,
    wherein the ionic group is cationic.